# EUROPEAN PATENT APPLICATION

(11) **EP 4 468 500 A1**
(43) Date of publication of application: **27.11.2024**
(21) Application number: 23747356.6
(22) Date of filing: 26.01.2023
(51) Int. Cl.: H01M 50/40, H01M 50/449, H01M 50/411, H01M 50/403, H01M 10/052

(54) **SEPARATOR AND LITHIUM SECONDARY BATTERY COMPRISING SAME**

(30) Priority: 26.01.2022 KR 20220011705
(71) Applicant: LG Chem, Ltd., Yeongdeungpo-gu Seoul 07336 (KR)
(72) Inventor: LEE, A-Young, Daejeon 34122 (KR); LEE, Joo-Sung, Daejeon 34122 (KR); JUNG, Kil-An, Daejeon 34122 (KR); KIM, Bong-Tae, Daejeon 34122 (KR); LEE, Ji-Myeong, Daejeon 34122 (KR)
(74) Representative: Hoffmann Eitle
(86) International application number: PCT/KR2023/001220
(87) International publication number: WO 2023/146315

(57) **Abstract**

The present disclosure relates to a separator, a method for manufacturing the same, and a lithium secondary battery including the same. The separator includes: a polymer porous support; and a coating layer disposed on at least one surface of the polymer porous support and containing a binder polymer, wherein the binder polymer includes a polyvinylidene fluoride-based polymer and a cyanoethylated polymer, and the coating layer has a surface roughness (Ra) of 300-500 nm. The separator includes a coating layer formed non-uniformly on the polymer porous support, and thus can provide an effect of improving the workability of a battery assembling process.

## Description

### TECHNICAL FIELD

The present disclosure relates to a separator and a lithium secondary battery including the same.

The present application claims priority to Korean Patent Application No. 10-2022-0011705 filed on January 26, 2022 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. Particularly, development of secondary batteries as energy storage systems rechargeable based on the electrochemical principle has been focused. More recently, active studies have been conducted about designing a novel electrode and battery in order to improve the capacity density and specific energy in developing such batteries.

There has been an increasing need for providing batteries used as power sources for such electronic devices with high energy density. Lithium secondary batteries are those satisfying such a need best. Therefore, active studies have been conducted about such lithium secondary batteries.

Among such lithium secondary batteries, a lithium-ion secondary battery is a repeatedly usable battery in which lithium ions reciprocate between the positive electrode and the negative electrode to store and generate electricity. The lithium-ion secondary battery is characterized in that it shows a high voltage and energy density, long cycle life and high preservability and provides a high output. Therefore, the application fields of such a lithium secondary battery have been expanded diversely to a portable IT instrument, a battery for electric vehicles, an energy storage system (ESS), or the like. Among such application fields, distribution of electric vehicles is the main key to the secondary battery growth and is a major growth engine of the secondary battery market.

The main four constitutional elements forming such a secondary battery are a positive electrode, a negative electrode, an electrolyte and a separator. Among them, the separator functions to isolate both electrodes, i.e. the positive electrode and the negative electrode, from each other to interrupt an electrical short-circuit caused by a physical contact between both electrodes, and to provide a channel through which ions can move between both electrodes through the electrolyte supported in micropores, thereby imparting ion conductivity.

Such a separator includes a microporous polymer film material having the above-mentioned functions, and particularly, a polyolefin-based separator has been used widely. Typical examples of the polyolefin-based separator may include a polyethylene (PE)- or polypropylene (PP)-based polymer material.

The methods for forming such a microporous structure may be broadly classified into a dry process based on an orientation step and a wet process based on an extraction step, and a dry separator or a wet separator may be used depending on the required characteristics. The two methods have been continuously studied and developed, but currently, a wet separator leads the market of a separator for secondary batteries.

Particularly, a wet separator using a polyethylene (PE)-based polymer, which is a typical polyolefin-based separator, has been used in compact lithium-ion secondary batteries for portable electronic instruments with no major problems. However, recently, in the case of application to electrical vehicles or in the case of the misuse of a battery, the PE-based separator undergoes a meltdown phenomenon due to the low melting point Tm of PE, when the temperature of a battery increases to a temperature higher than the melting point of PE, thereby causing the problems, such as ignition and explosion, related with poor heat resistance.

To solve this, a dry separator using a polypropylene (PP)-based polymer having excellent thermal properties has been used in earnest. However, in order to ensure the stability of a lithium-ion battery even when using such a polypropylene (PP)-based polymer, there has been developed a method for coating the separator surface with inorganic particles and a polymer binder. Since a ceramic coated safety reinforced separator (SRS) as a part of such development was applied to a lithium-ion secondary battery for electric vehicles, it has become the standard of heat resistant separator technology. To obtain such a separator, use of a wet separator which allows thickness thinning has led the market.

As a method for manufacturing such a wet separator, there has been studied and developed a method of coating a dry PP film with a polymer binder through a dipping phase separation process which is a non-solvent induced phase separation (NIPS) process. In the case of such a method, there is an advantage in that the processing cost can be reduced and uniform coating and adhesion can be ensured through the reutilization of a solvent, such as N-methyl pyrrolidone (NMP). However, the issue of a disadvantage in process running caused by the stickiness of the coating layer during the assembly of a battery has been raised.

### DISCLOSURE

### Technical Problem

The present disclosure is designed to solve the problems of the related art, and therefore the present disclosure is directed to providing a separator for a lithium secondary battery which ensures stability while providing excellent electrochemical performance.

The present disclosure is also directed to providing a separator which improves the workability of an assembling process during the manufacture of a battery through the improvement of the stickiness of the coating layer in the separator.

In addition, the present disclosure is directed to providing a separator which improves the workability of an assembling process during the manufacture of a battery not only by improving the stickiness of the coating layer but also by increasing the surface roughness.

Further, the present disclosure is directed to providing a method for manufacturing a separator having the above-mentioned characteristics, and a lithium secondary battery using the same.

### Technical Solution

In one aspect of the present disclosure, there is provided a separator according to any one of the following embodiments.

According to the first embodiment, there is provided a separator, including:
a polymer porous support; and a coating layer disposed on at least one surface of the polymer porous support and containing a binder polymer, wherein the binder polymer includes a polyvinylidene fluoride-based polymer and a cyanoethylated polymer, and the coating layer has a surface roughness (Ra) of 300-500 nm.

According to the second embodiment, there is provided the separator as defined in the first embodiment, wherein the cyanoethylated polymer includes cyanoethyl polyvinyl alcohol, cyanoethyl pullulan, cyanoethyl cellulose, cyanoethyl sucrose, cyanoethyl ester, cyanoethyl acetate, cyanoethyl phosphate, or a mixture of two or more of them.

According to the third embodiment, there is provided the separator as defined in the first or the second embodiment, wherein the cyanoethyl polyvinyl alcohol includes a repeating unit represented by the following Chemical Formula 1 and a repeating unit represented by the following Chemical Formula 2 at a molar ratio of 50:50-70:30:

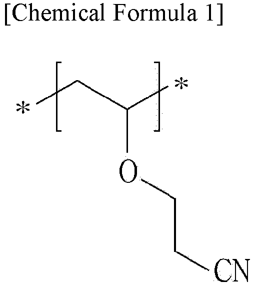

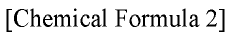

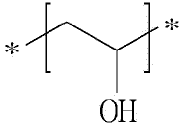

According to the fourth embodiment, there is provided the separator as defined in any one of the first to the third embodiments, wherein the cyanoethylated polymer has a weight average molecular weight (Mw) of 100,000-400,000 g/mol, a number average molecular weight (Mn) of 50,000-200,000 g/mol and a glass transition temperature (Tg) of 0-100°C.

According to the fifth embodiment, there is provided the separator as defined in any one of the first to the fourth embodiments, wherein the polyvinylidene fluoride-based polymer includes at least one selected from polyvinylidene fluoride, polyvinylidene fluoride-tetrafluoroethylene (PVDF-TFE), polyvinylidene fluoride-chlorotrifluoroethylene, polyvinylidene fluoride-trifluoroethylene and polyvinylidene fluoride-trifluoroethylene-chlorofluoroethylene.

According to the sixth embodiment, there is provided the separator as defined in any one of the first to the fifth embodiments, wherein the polyvinylidene fluoride-based polymer includes polyvinylidene fluoride-chlorotrifluoroethylene.

According to the seventh embodiment, there is provided the separator as defined in any one of the first to the sixth embodiments, wherein the weight ratio of the polyvinylidene fluoride-based polymer to the cyanoethylated polymer is 85:15-99:1.

According to the eighth embodiment, there is provided the separator as defined in any one of the first to the seventh embodiments, wherein the coating layer is concentrated and formed locally on the surface of the polymer porous support.

According to the ninth embodiment, there is provided the separator as defined in any one of the first to the eighth embodiments, wherein the coating layer has a surface roughness (Ra) of 320-420 nm.

In another aspect of the present disclosure, there is provided a method for manufacturing a separator according to any one of the following embodiments.

According to the tenth embodiment, there is provided a method for manufacturing a separator, including the steps of:
applying a slurry for coating containing a binder polymer to at least one surface of a polymer porous support; and
dipping the polymer porous support coated with the slurry for coating in a composition containing a non-solvent for the binder polymer to form a coating layer,
wherein the binder polymer includes a polyvinylidene fluoride-based polymer and a cyanoethylated polymer, and the coating layer has a surface roughness (Ra) of 300-500 nm.

According to the eleventh embodiment, there is provided the method for manufacturing a separator as define din the tenth embodiment, wherein the slurry for coating has a solid content of 1-7 wt%.

In still another aspect of the present disclosure, there is provided a lithium secondary battery according to any one of the following embodiments.

According to the twelfth embodiment, there is provided a lithium secondary battery, including a positive electrode, a negative electrode and a separator interposed between the positive electrode and the negative electrode, wherein the separator is the same as defined in any one of the first to the ninth embodiments.

According to the thirteenth embodiment, there is provided a method for manufacturing the separator as defined in any one of the first to the ninth embodiments.

According to the fourteenth embodiment, there is provided a lithium secondary battery, including a positive electrode, a negative electrode and a separator interposed between the positive electrode and the negative electrode, wherein the separator is one obtained by the method for manufacturing a separator as defined in any one of the tenth, the eleventh and the thirteenth embodiments.

### Advantageous Effects

The separator according to an embodiment of the present disclosure shows excellent characteristics in terms of the interruption of an electric short-circuit between a positive electrode and a negative electrode and ion conductivity, and significantly improves the heat resistance and stability of a secondary battery when being used in the secondary battery.

The separator according to an embodiment of the present disclosure improves the surface stickiness by the local concentration of a coating layer, and thus provides improved workability upon the assembling and fixing of a battery and improves the performance of the resultant battery.

The separator according to an embodiment of the present disclosure shows improved surface roughness by inducing instability of phase separation and concentration of a coating layer during the manufacture of the separator, and thus provides improved workability during a battery assembling step and improves the performance of the resultant battery.

The method for manufacturing a separator according to an embodiment of the present disclosure can provide the separator as disclosed herein.

The method for manufacturing a separator according to an embodiment of the present disclosure uses a slurry for coating having a low solid content to form a coating layer concentrated locally in the separator, thereby providing a separator improved in terms of stickiness.

The lithium secondary battery according to an embodiment of the present disclosure uses the above-described separator, and thus shows improved heat resistance and stability and improved performance.

The characteristics of each of the separator, the method for manufacturing a separator and the lithium secondary battery according to an embodiment of the present disclosure are not limited to those as described above, and the effects of the present disclosure are not limited to the above-mentioned effects.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a scanning electron microscopic (SEM) image illustrating the coating layer according to Example 1 described hereinafter.
FIG. 2 is an SEM image illustrating the coating layer according to Example 2 described hereinafter.
FIG. 3 is an SEM image illustrating the coating layer according to Comparative Example 1 described hereinafter.

### BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

As used herein, `weight average molecular weight (Mw)' and `number average molecular weight (Mn)' are determined by a conventional method known to those skilled in the art, and for example, by using gel permeation chromatography (GPC).

As used herein, `glass transition temperature (Tg)' is determined by a conventional method known to those skilled in the art, and for example, by using differential scanning calorimetry (DSC).

As used herein, `surface roughness (Ra)' is a value determined by measuring the curve formed by the section of a surface and determining the average height when the surface is assumed to be flat without roughness at the reference length (central average line). For example, the surface roughness may be determined by using an optical profiler (New View 8300, available from Zygo).

As used herein, `pore size' is determined by a conventional method known to those skilled in the art, and for example, by using capillary flow porometry.

As used herein, 'porosity (%)' refers to a value calculated by subtracting the volume expressed from the weight and density of each constitutional element of a layer to be analyzed in terms of porosity from the volume calculated from the thickness, width and length of the layer.

As used herein, `average particle diameter (D₅₀)' refers to the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D₅₀ may be determined by calculating the particle diameter at the point of 50% in the particle number accumulated distribution depending on particle diameter in the analyzer system.

In one aspect of the present disclosure, there is provided a separator, including:
a polymer porous support; and a coating layer disposed on at least one surface of the polymer porous support and containing a binder polymer, wherein the binder polymer includes a polyvinylidene fluoride-based polymer and a cyanoethylated polymer, and the coating layer has a surface roughness (Ra) of 300-500 nm.

According to an embodiment of the present disclosure, the polymer porous support is not particularly limited, as long as it has a porous structure. For example, the polymer porous support may be a porous polymer substrate, particularly, at least one of a porous polymer film substrate and porous polymer nonwoven substrate.

Particular examples of the porous polymer film substrate may include a porous polymer film made of polyolefin, such as polyethylene (PE) or polypropylene (PP), but is not limited thereto. For example, the porous polymer film substrate made of polyolefin may be one realizing a shut-down function at a temperature of 80-130°C.

Herein, the polyolefin may include polyethylene such as high-density polyethylene (HDPE), linear low-density polyethylene (LLDPE), low-density polyethylene (LDPE) or ultrahigh-molecular weight polyethylene (UHMWPE); polypropylene; polybutylene; polypentene; polyhexene; polyoctene; a copolymer of at least two of ethylene, propylene, butene, pentene, 4-methylpentene, hexene, heptene and octene; or a mixture thereof.

Typical examples of commercially available porous polymer films made of polyolefin, which may be used as such polymer porous supports, may include wet polyethylene-based films (Asahi-Kasei E-Materials, Toray, SK IE Technology, Shanghai Energy, Sinoma, Entek), dry polypropylene-based films (Shenzhen Senior, Cangzhou Mingzhu), dry polypropylene/polyethylene multilayer structure-based films (Polypore, Ube), or the like, but are not limited thereto.

The polyolefin may have a weight average molecular weight (Mw) of 200,000-1,500,000 g/mol, 220,000-1,000,000 g/mol, or 250,000-800,000 g/mol. When the polyolefin satisfies the above-defined range of weight average molecular weight, it is possible to obtain a separator having excellent strength and heat resistance while ensuring the uniformity and film-forming processability of a porous support using polyolefin.

In addition, the porous polymer film substrate may be obtained by molding various polymers, such as polyester, other than polyolefin into the shape of a film. Further, the porous polymer film substrate may be formed to have a laminate structure having two or more film layers. Herein, each film layer may include a polymer, such as the above-mentioned polyolefin, polyester, or the like, alone or in combination.

Besides the polyolefin, the porous polymer film substrate and the porous nonwoven substrate may be formed of polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, or the like, alone or in combination.

There is no particular limitation in the thickness of the polymer porous support, but the polymer porous support may have a thickness of 1 µm or more, 5 µm or more, 50 µm or less, or 100 µm or less. When the thickness satisfies the above-defined range, it is possible to improve the problem of the polymer porous support functioning as a resistance layer, while allowing the polymer porous support to maintain its mechanical properties. However, the scope of the present disclosure is not limited thereto.

The pore size and porosity of the polymer porous support are not particularly limited, but the polymer porous support may have a porosity of 10-95% and a pore size (diameter) of 0.1-50 µm. When the pore size and porosity satisfy the above-defined ranges, it is possible to prevent the polymer porous support from functioning as a resistance layer and to allow the polymer porous support to maintain its mechanical properties. In addition, the polymer porous support may have a shape of fibers or membrane.

According to an embodiment of the present disclosure, the coating layer disposed on at least one support of the polymer porous support includes a binder polymer, and the binder polymer includes a polyvinylidene fluoride-based polymer and a cyanoethyl polyvinyl alcohol.

Polyvinylidene fluoride (PVDF) is a material used widely for microfiltration (MF) membrane or ultrafiltration (UF) membrane applied mainly to water treatment by virtue of high thermal stability and chemical resistance, and studied intensively in the research and development of a separator. Particularly, PVDF is a crystalline polymer, includes 59.4% of fluorine, 3% of hydrogen and the balance (37.6%) of carbon atoms, and classified into the four types of structures of α, β, γ and δ depending on the crystal structure. Such structures are interchanged by a certain condition of temperature, cooling rate, orientation, or the like. In general, PVDF has a crystallization degree of 35-70%, and the crystal structure and crystallization degree may significantly affect the mechanical properties of PVDF. In addition, PVDF has high heat resistance by virtue of strong C-F bonding, and shows relatively stable resistance against chemicals, except for a basic solution, ester, ketone, or the like. For these reasons, when using PVDF, it is possible to select various solvents as compared to the conventional polymer materials, such as PP and PTFE, and to manufacture separators having various pore structures through a phase inversion process with ease.

Therefore, a stable separator may be provided by using such a binder polymer including a polyvinylidene fluoride (PVDF)-based polymer, but the scope of the present disclosure is not limited thereto.

As used herein, the term `polyvinylidene fluoride-based polymer' may refer not only to polyvinylidene fluoride (PVDF) including repeating units represented by -(C₂H₂F₂)-alone, but also to any polymer containing at least one vinylidene fluoride repeating unit represented by -(C₂H₂F₂)- therein.

Particular examples of the polyvinylidene fluoride-based polymer may include, but are not limited to: any one selected from selected from polyvinylidene fluoride (PVDF), polyvinylidene fluoride-tetrafluoroethylene (PVDF-TFE), polyvinylidene fluoride-chlorotrifluoroethylene (PVDF-CTFE), polyvinylidene fluoride-trifluoroethylene (PVDF-TrFE) and polyvinylidene fluoride-trifluoroethylene-chlorofluoroethylene (PVDF-TrFE-CFE), or two or more of them.

According to an embodiment of the present disclosure, the polyvinylidene fluoride-based polymer may include polyvinylidene fluoride-chlorotrifluoroethylene (PVDF-CTFE).

According to another embodiment of the present disclosure, the polyvinylidene fluoride-based polymer may have a glass transition temperature (Tg) of -200 to 200°C, for example. When the binder polymer satisfies the above-defined range of glass transition temperature, the finally formed coating layer may show improved mechanical properties, such as flexibility and elasticity, but the scope of the present disclosure is not limited thereto.

According to still another embodiment of the present disclosure, the polyvinylidene fluoride-based polymer may have ion conductivity. When a binder polymer having ion conductivity is used, it is possible to further improve the performance of a battery. The polyvinylidene fluoride-based polymer may have a dielectric constant of 1.0 to 100 (measured at a frequency of 1 kHz), or from 10 to 100. When the binder polymer has the above-defined range of dielectric constant, it is possible to improve the salt dissociation degree in an electrolyte, but the scope of the present disclosure is not limited thereto.

As used herein, the term `cyanoethylated polymer' refers to any polymer substituted with a cyanoethyl group (-C₂H₄CN) at one or more positions in the structure thereof.

For example, the cyanoethylated polymer used according to an embodiment of the present disclosure may be cyanoethyl polyvinyl alcohol, and the term `cyanoethyl polyvinyl alcohol' refers to cyanoethylated polyvinyl alcohol in which the hydrogen atom present in at least one hydroxyl group (-OH) present therein is substituted with a cyanoethyl group (-C₂H₄CN). The cyanoethyl polyvinyl alcohol may be used with no particular limitation, as long as at least one hydroxyl group of polyvinyl alcohol has a cyanoethylated structure, and the method for preparing the cyanoethyl polyvinyl alcohol is not particularly limited.

When the binder polymer includes a cyanoethylated polymer, the affinity with water (H₂O) as a non-solvent is increased during the dipping phase separation of the coating layer for forming the binder to induce instability of phase separation, thereby inducing the formation of a locally concentrated coating layer. However, the mechanism of the present disclosure is not limited thereto.

According to still another embodiment of the present disclosure, particular examples of the cyanoethylated polymer may include, but are not limited to: cyanoethyl polyvinyl alcohol, cyanoethyl pullulan, cyanoethyl cellulose, cyanoethyl sucrose, cyanoethyl ester, cyanoethyl acetate, cyanoethyl phosphate, or a mixture of two or more of them.

According to an embodiment of the present disclosure, the cyanoethylated polymer may include cyanoethyl polyvinyl alcohol.

According to an embodiment of the present disclosure, the cyanoethyl polyvinyl alcohol may include a repeating unit represented by the following Chemical Formula 1, alone:

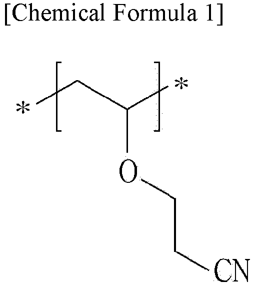

According to an embodiment of the present disclosure, the cyanoethyl polyvinyl alcohol may further include a repeating unit represented by the following Chemical Formula 2 in addition to the repeating unit represented by Chemical Formula 1, if the cyanoethylation of the hydroxyl groups in polyvinyl alcohol is not performed to 100%:

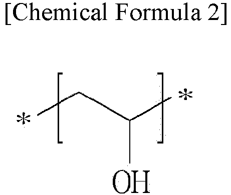

According to an embodiment of the present disclosure, the cyanoethyl polyvinyl alcohol may include a repeating unit represented by Chemical Formula 1 and a repeating unit represented by Chemical Formula 2. For example, the molar ratio of the repeating unit represented by Chemical Formula 1 to the repeating unit represented by Chemical Formula 2 may be 50:50-70:30, but is not limited thereto.

According to another embodiment of the present disclosure, the molar ratio of the repeating unit represented by Chemical Formula 1 to the repeating unit represented by Chemical Formula 2 may be 50:50 or more, 55:45 or more, 60:40 or more, 62.5: 37.5 or more, 70:30 or less, 67.5:32.5 or less. When the molar ratio of both repeating units satisfies the above-defined range, it is possible to further improve the stickiness of the coating layer, but the scope of the present disclosure is not limited thereto.

According to still another embodiment of the present disclosure, the cyanoethylated polymer may have a weight average molecular weight (Mw) of 100,000-400,000 g/mol. Particularly, the cyanoethylated polymer may have a weight average molecular weight (Mw) of 100,000-350,000 g/mol, more particularly 130,000-300,000 g/mol, or 150,000-250,000 g/mol.

According to still another embodiment of the present disclosure, the cyanoethylated polymer may have a number average molecular weight (Mn) of 50,000-200,000 g/mol. Particularly, the cyanoethylated polymer may have a number average molecular weight (Mn) of 80,000-170,000 g/mol, or 100,000-140,000 g/mol.

According to still another embodiment of the present disclosure, the cyanoethylated polymer may have a glass transition temperature (Tg) of 0-100°C. Particularly, the cyanoethylate polymer may have a Tg of 30-90°C, 50-80°C, more particularly 10-60°C.

According to still another embodiment of the present disclosure, the cyanoethylated polymer may have a weight average molecular weight (Mw) of 150,000-250,000 g/mol, a number average molecular weight (Mn) of 100,000-140,000 g/mol, and a glass transition temperature (Tg) of 10-60°C.

According to the present disclosure, when each of the Mw, Mn and Tg of the cyanoethylated polymer satisfies each of the above-defined ranges, it is possible to further improve the stickiness of the coating layer, but the scope of the present disclosure is not limited thereto.

According to an embodiment of the present disclosure, the binder polymer may have a weight ratio of the polyvinylidene fluoride-based polymer to the cyanoethylated polymer of 85:15-99:1 (polyvinylidene fluoride-based polymer:cyanoethylated polymer). Particularly, the weight ratio may be 90:10-99:1, 85:15-95:5, or 90:10-95:5, more particularly, 93:7-95:5, or 90:10-93:7, and even more particularly, 93:7. When the weight ratio satisfies the above-defined range, it is possible to further improve the stickiness of the coating layer, but the scope of the present disclosure is not limited thereto.

The separator according to an embodiment of the present disclosure may have a surface roughness (Ra) of the coating layer of 300-500 nm. Particularly, the coating layer may have a surface roughness of 300 nm or more, 310 nm or more, 320 nm or more, 330 nm or more, 340 nm or more, 350 nm or more, 360 nm or more, 370 nm or more, 380 nm or more, 390 nm or more 400 nm or more, 500 nm or less, 490 nm or less, 480 nm or less, 470 nm or less, 460 nm or less, or 450 nm or less. More particularly, the coating layer may have a surface roughness (Ra) of 300-500 nm, or 320-420 nm. When the surface roughness (Ra) of the coating layer satisfies a range of 300-500 nm, there is an advantage in that friction force is generated to provide improved running characteristics.

According to an embodiment of the present disclosure, the binder polymer may further include a conventional binder polymer, besides the polyvinylidene fluoride-based polymer and the cyanoethylated polymer. Particular examples of such a conventional polymer binder may include, but are not limited to: polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, pullulan, carboxymethyl cellulose, styrene butadiene copolymer, polyimide, or a mixture of two or more of them.

According to another embodiment, when the binder polymer further includes another binder polymer, besides the polyvinylidene fluoride-based polymer and the cyanoethylated polymer, the content of the conventional binder polymer is not particularly limited, as long as it does not adversely affect the objects of the present disclosure.

According to an embodiment of the present disclosure, the thickness of the coating layer may be 1.5-5.0 µm on one surface of the polymer porous support. When the thickness of the coating layer satisfies the above-defined range, it is possible to improve the fixing running characteristics due to the generation of surface frictional force and to easily increase the cell strength of a battery, while providing excellent adhesion to an electrode.

According to an embodiment of the present disclosure, the coating layer may be concentrated and formed locally on the surface of the polymer porous support.

Since the slurry composition for forming the coating layer includes a polyvinylidene fluoride-based polymer and cyanoethyl polyvinyl alcohol as binder polymers, and has a minimized solid content, instability of phase separation may be induced, and thus a coating layer concentrated locally on at least one surface of the polymer porous support may be formed.

According to an embodiment of the present disclosure, such local concentration and formation of the coating layer may be observed through scanning electron microscopy (SEM).

According to another embodiment of the present disclosure, such local concentration and formation of the coating layer may be determined by measuring the surface roughness (Ra) of the coating layer, for example.

In the separator according to an embodiment of the present disclosure, the coating layer shows improved stickiness characteristics and increased surface roughness to improve the assembling processability of a battery, but the characteristics of the separator are not limited thereto.

In another aspect of the present disclosure, there is provided a method for manufacturing a separator, including the steps of:
applying a slurry for coating containing a binder polymer to at least one surface of a polymer porous support; and
dipping the polymer porous support coated with the slurry for coating in a composition containing a non-solvent for the binder polymer to form a coating layer,
wherein the binder polymer includes a polyvinylidene fluoride-based polymer and a cyanoethylated polymer, and the coating layer has a surface roughness (Ra) of 300-500 nm.

In the method for manufacturing a separator according to an embodiment of the present disclosure, reference will be made to the above description about the polymer porous support, the binder polymer, the polyvinylidene fluoride-based polymer, the cyanoethylated polymer, the constitution of the coating layer and the surface roughness (Ra) of the coating layer.

According to an embodiment of the present disclosure, the step of forming a coating layer may be carried out by applying a slurry for coating containing a binder polymer to at least one surface of a polymer porous support to form a coating layer through dipping phase separation.

Particularly, the step of forming a coating layer may include the steps of: applying a slurry for coating containing a binder polymer and a solvent to at least one surface of the polymer porous support; and dipping the polymer porous support coated with the slurry for coating in a composition containing a non-solvent for the binder polymer to form a coating layer.

The solvent may have a solubility parameter similar to the solubility of the binder polymer and a low boiling point. This is because such a solvent allows homogeneous mixing and may be removed with ease subsequently.

Particular examples of the solvent may include at least one compound selected independently from acetone, tetrahydrofuran, methylene chloride, chloroform, dimethyl formamide, N-methyl-2-pyrrolidone, cyclohexane, methanol, ethanol, isopropyl alcohol and water, or a mixture of two or more of them.

Herein, the solvent may function as a solvent capable of dissolving the binder polymer, or as a dispersion medium capable of dispersing the binder polymer, depending on the particular type of the binder polymer to be mixed in combination therewith.

According to an embodiment of the present disclosure, methods for applying the slurry for coating to the polymer porous support may be classified into pre-metering methods and post-metering methods. The pre-metering methods include predetermining the coating amount and introducing the slurry, and particular examples thereof may include slot die coating, gravure coating, or the like. The post-metering methods include applying the slurry as a coating solution to the polymer porous support in a sufficient coating amount and raking out the slurry to a predetermined amount, and particular examples thereof may include bar coating, or the like. In addition to the above-mentioned methods, there is direct metering coating including a combination of the pre-metering method with the post-metering method.

The slurry for coating may be applied by any non-limiting method, including the above-mentioned methods, and then the polymer porous support coated with the slurry for coating may be dipped in a composition containing a non-solvent to cause phase separation, thereby forming a coating layer.

According to an embodiment of the present disclosure, the slurry for coating may have a solid content of 1-7 wt%. Particularly, the solid content may be 1 wt% or more, 1.5 wt% or more, 2 wt% or more, 2.5 wt% or more, 3 wt% or more, 7 wt% or less, 6.5 wt% or less, 6 wt% or less, 5.5 wt% or less, 5 wt% or less, 4.5 wt% or less, or 4 wt% or less, and for example, 1-7 wt%, 2-6 wt%, or 3-6 wt%. When the solid content in the slurry for coating satisfies the above-defined range, it is possible to form a non-uniform coating layer on the polymer porous support to provide an effect of improving the problem of the stickiness of the coating layer. For example, when the solid content is less than 1 wt%, no concentration of the coating layer occurs, and there is little change in Ra. When the solid content is larger than 7 wt%, it is not possible to provide sufficient improvement as compared to the cost required for introducing the solid content.

According to another embodiment of the present disclosure, the slurry for coating has a solid content of 7 wt% or less to induce instability of phase separation during the dipping phase separation of the coating layer, thereby forming a coating layer in which local concentration is induced. However, the mechanism of the present disclosure is not limited thereto.

According to the method for manufacturing a separator according to an embodiment of the present disclosure, the above-described separator may be obtained.

In still another aspect of the present disclosure, there is provided a lithium secondary battery including a positive electrode, a negative electrode and a separator interposed between the positive electrode and the negative electrode, wherein the separator is the above-described separator.

Since the lithium secondary battery including the separator according to an embodiment of the present disclosure uses the separator including a coating layer concentrated locally on the polymer porous support and having an improved surface roughness, it is possible to improve the process workability, while realizing excellent electrochemical performance of the battery.

The lithium secondary battery may include a lithium metal secondary battery, a lithium-ion secondary battery, a lithium polymer secondary battery, a lithium-ion polymer secondary battery, or the like.

The electrodes used in combination with the separator according to the present disclosure are not particularly limited, and may be obtained by allowing electrode active materials to be bound to an electrode current collector through a method generally known in the art.

Among the electrode active materials, non-limiting examples of a positive electrode active material may include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof may be used.

Non-limiting examples of the negative electrode active material may include conventional negative electrode active materials that may be used for the negative electrodes for conventional electrochemical devices. Particular examples of the negative electrode active material may include lithium-intercalating materials, such as lithium metal or lithium alloys, carbon, petroleum coke, activated carbon, graphite or other carbonaceous materials, silicon, silicon oxide, or the like.

Non-limiting examples of the positive electrode current collector may include foil made of aluminum, nickel or a combination thereof. Non-limiting examples of the negative electrode current collector may include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before assembling a battery or in the final step of assembling a battery.

### MODE FOR DISCLOSURE

Examples will be described more fully hereinafter so that the present disclosure can be understood with ease. However, the following examples are for illustrative purposes only, and the scope of the present disclosure is not limited thereto.

### [Method for Manufacturing Separator and Evaluation of Surface Roughness]

A separator including a coating layer formed on one surface of a dry substrate was obtained as follows, and then the resultant separator was evaluated in terms of the surface roughness (Ra) of the coating layer by using an optical profiler (New View 8300, Zygo Co.).

To form the coating layer, N-methyl-2-pyrrolidone (NMP) was used as a solvent, and dipping phase separation was carried out by controlling the temperature of a solidifying solution to less than 20°C, the temperature of a rinsing solution to 40°C or higher and the temperature of the final rinsing solution to a temperature lower than the drying temperature.

### Example 1

PVDF-CTFE and cyanoethyl PVA (CN substitution ratio 65 mol%) binders were mixed at a weight ratio of 93:7 to prepare a slurry having a solid content of 5.5%, and the slurry was applied to a dry substrate (13.6 µm, made of PP) through dipping phase separation by using a dot-patterned microgravure bar to obtain a separator having a final thickness of 15 µm.

Herein, the coating layer of the resultant separator had a surface roughness (Ra) of 350 nm.

### Example 2

A separator having a final thickness of 15 µm was obtained in the same manner as Example 1, except that PVDF-CTFE and cyanoethyl PVA (CN substitution ratio 65 mol%) binders were mixed at a weight ratio of 93:7 to prepare a slurry having a solid content of 3%, and the slurry was used to form a coating layer by using a grid-patterned microgravure bar.

Herein, the coating layer of the resultant separator had a surface roughness (Ra) of 450 nm.

### Comparative Example 1

A separator having a final thickness of 15 µm was obtained in the same manner as Example 1, except that PVDF-CTFE was used as a binder polymer to prepare a slurry for coating having a solid content of 5.5%.

### Comparative Example 2

A separator having a final thickness of 15 µm was obtained in the same manner as Example 1, except that PVDF-CTFE and cyanoethyl PVA (CN substitution ratio 87 mol%) binders were mixed at a weight ratio of 95:5 to prepare a slurry having a solid content of 1%, and the slurry was used to form a coating layer.

Herein, the coating layer of the resultant separator had a surface roughness (Ra) of 150 nm.

### Comparative Example 3

A separator having a final thickness of 15 µm was obtained in the same manner as Example 2, except that the cyanoethyl PVA binder has a CN substitution ratio of 87 mol%.

Herein, the coating layer of the resultant separator had a surface roughness (Ra) of 132 nm.

### Comparative Example 4

A separator having a final thickness of 15 µm was obtained in the same manner as Example 1, except that a slurry having a solid content of 1% was prepared.

Herein, the coating layer of the resultant separator had a surface roughness (Ra) of 152 nm.

### Comparative Example 5

A separator having a final thickness of 15 µm was obtained in the same manner as Example 1, except that PVDF-CTFE and PEG400 were mixed at a weight ratio of 93:7 to prepare a slurry having a solid content of 5.5%, and the slurry was used to form a coating layer.

Herein, the coating layer of the resultant separator had a surface roughness (Ra) of 164 nm.

### Comparative Example 6

A separator having a final thickness of 15 µm was obtained in the same manner as Example 1, except that PVDF-CTFE and PEG6000 were mixed at a weight ratio of 93:7 to prepare a slurry having a solid content of 5.5%, and the slurry was used to form a coating layer.

Herein, the coating layer of the resultant separator had a surface roughness (Ra) of 144 nm.

### SEM Image Analysis Results

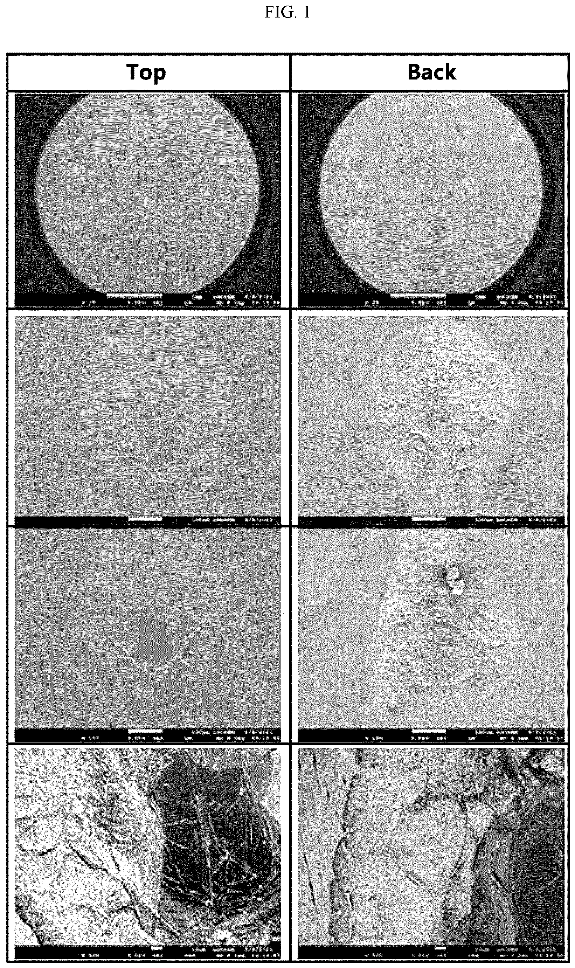

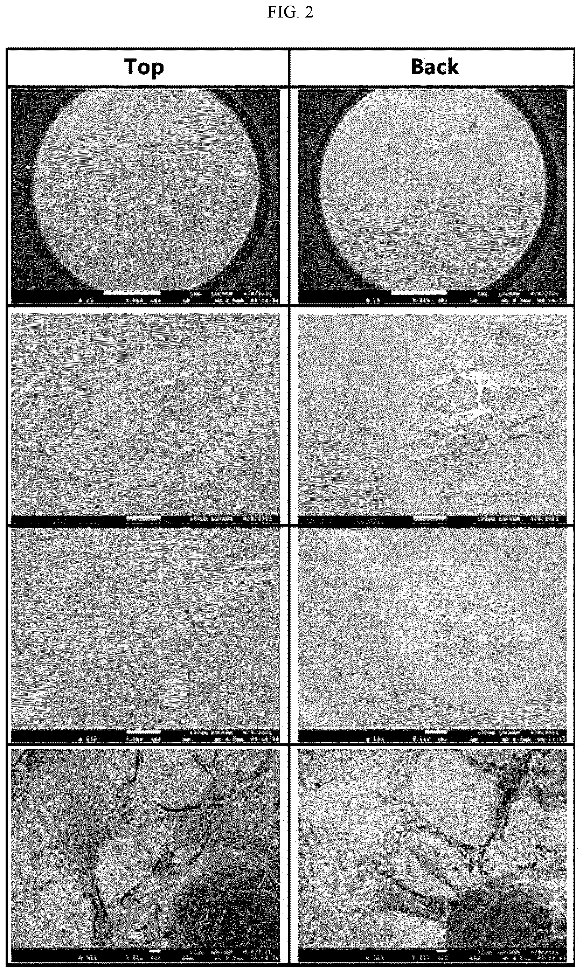

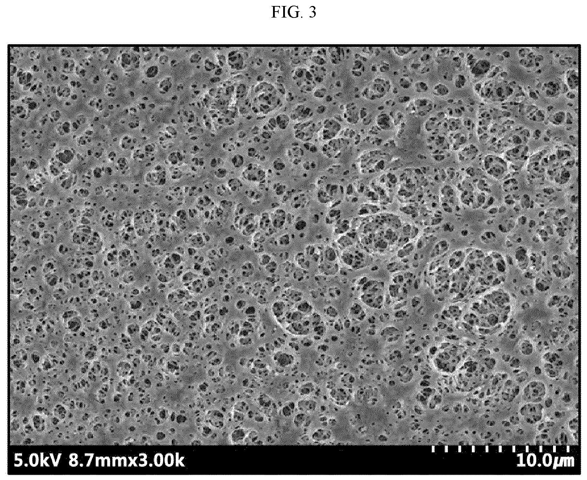

FIG. 1 illustrates a scanning electron microscopic (SEM) image of the separator according to Example 1, FIG. 2 illustrates an SEM image of the separator according to Example 2, and FIG. 3 illustrates an SEM image of the separator according to Comparative Example 1.

When comparing the images of FIGS. 1 to 3 with one another, it can be seen that the coating layer containing a polyvinylidene fluoride-based polymer and cyanoethyl polyvinyl alcohol as binder polymers shows a non-uniform surface and is concentrated and formed at a local zone.

### Surface Roughness Value Analysis Results

It can be seen from the above results that the separators according to Examples 1 and 2 have an improved surface roughness (Ra) and improve the problem of the stickiness, and thus can improve the running stability and workability during the assembly of a battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A separator, comprising:
a polymer porous support; and
a coating layer disposed on at least one surface of the polymer porous support and containing a binder polymer,
wherein the binder polymer comprises a polyvinylidene fluoride-based polymer and a cyanoethylated polymer, and
the coating layer has a surface roughness (Ra) of 300-500 nm.

2. The separator according to claim 1, wherein the cyanoethylated polymer comprises cyanoethyl polyvinyl alcohol, cyanoethyl pullulan, cyanoethyl cellulose, cyanoethyl sucrose, cyanoethyl ester, cyanoethyl acetate, cyanoethyl phosphate, or a mixture of two or more of them.

3. The separator according to claim 2, wherein the cyanoethyl polyvinyl alcohol comprises a repeating unit represented by the following Chemical Formula 1 and a repeating unit represented by the following Chemical Formula 2 at a molar ratio of 50:50-70:30:

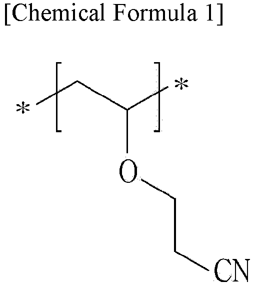

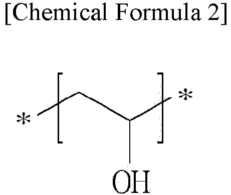

4. The separator according to claim 1, wherein the cyanoethylated polymer has a weight average molecular weight (Mw) of 100,000-400,000 g/mol, a number average molecular weight (Mn) of 50,000-200,000 g/mol and a glass transition temperature (Tg) of 0-100°C.

5. The separator according to claim 1, wherein the polyvinylidene fluoride-based polymer comprises at least one selected from polyvinylidene fluoride, polyvinylidene fluoride-tetrafluoroethylene (PVDF-TFE), polyvinylidene fluoride-chlorotrifluoroethylene, polyvinylidene fluoride-trifluoroethylene and polyvinylidene fluoride-trifluoroethylene-chlorofluoroethylene.

6. The separator according to claim 5, wherein the polyvinylidene fluoride-based polymer comprises polyvinylidene fluoride-chlorotrifluoroethylene.

7. The separator according to claim 1, wherein the weight ratio of the polyvinylidene fluoride-based polymer to the cyanoethylated polymer is 85:15-99:1.

8. The separator according to claim 1, wherein the coating layer is concentrated and formed locally on the surface of the polymer porous support.

9. The separator according to claim 1, wherein the coating layer has a surface roughness (Ra) of 320-420 nm.

10. A method for manufacturing a separator, comprising the steps of:
applying a slurry for coating containing a binder polymer to at least one surface of a polymer porous support; and
dipping the polymer porous support coated with the slurry for coating in a composition containing a non-solvent for the binder polymer to form a coating layer,
wherein the binder polymer comprises a polyvinylidene fluoride-based polymer and a cyanoethylated polymer, and
the coating layer has a surface roughness (Ra) of 300-500 nm.

11. The method for manufacturing a separator according to claim 10, wherein the slurry for coating has a solid content of 1-7 wt%.

12. A lithium secondary battery, comprising a positive electrode, a negative electrode and a separator interposed between the positive electrode and the negative electrode, wherein the separator is the same as defined in any one of claims 1 to 9.
